(19)

Europäisches Patentamt

European Patent Office

Office européen des brevets

(11) **EP 4 502 852 A1**

(12) **EUROPEAN PATENT APPLICATION**
published in accordance with Art. 153(4) EPC

(43) Date of publication:
**05.02.2025 Bulletin 2025/06**

(21) Application number: **22934702.6**

(22) Date of filing: **15.09.2022**

(51) International Patent Classification (IPC):
*G06F 30/17* (2020.01)    *G06F 30/23* (2020.01)
*G06F 111/10* (2020.01)    *G06F 119/02* (2020.01)
*G06F 119/14* (2020.01)

(86) International application number:
**PCT/CN2022/119009**

(87) International publication number:
**WO 2023/184883 (05.10.2023 Gazette 2023/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2022  CN 202210329562**

(71) Applicants:
• **China Nuclear Power Technology Research
  Institute Co., Ltd.**
  **Shenzhen, Guangdong 518031 (CN)**
• **China General Nuclear Power Corporation**
  **Shenzhen, Guangdong 518028 (CN)**
• **CGN Power Co., Ltd.**
  **Shenzen, Guangdong 518028 (CN)**

(72) Inventors:
• **ZHANG, Ming**
  **Shenzhen, Guangdong 518031 (CN)**
• **LI, Jinggang**
  **Shenzhen, Guangdong 518031 (CN)**
• **JIN, Xin**
  **Shenzhen, Guangdong 518031 (CN)**
• **LIU, Xiaohan**
  **Shenzhen, Guangdong 518031 (CN)**
• **LU, Yong**
  **Shenzhen, Guangdong 518031 (CN)**
• **ZHU, Yanan**
  **Shenzhen, Guangdong 518031 (CN)**

(74) Representative: **Michalski Hüttermann & Partner
Patentanwälte mbB
Kaistraße 16A
40221 Düsseldorf (DE)**

(54) **METHOD AND DEVICE FOR CALCULATING CREEP DEFORMATION OF FINITE-LENGTH CLADDING TUBE, AND COMPUTER DEVICE**

(57)     The present application relates to a method for calculating creep deformation of a finite-length cladding tube, comprising: acquiring structural parameters of a finite-length cladding tube (102); performing discrete processing on the structural parameters, and obtaining a finite element mesh model corresponding to the finite-length cladding tube (104); calculating stiffness information and load information according to model parameters of the finite element mesh model and the structure parameters (106); and calculating creep deformation results of the finite-length cladding tube according to the stiffness information, the load information, a preset additional load vector, and a preset creep deformation calculation relationship (108).

FIG. 1

EP 4 502 852 A1

**Description**

**CROSS-REFERENCE TO RELATED APPLICATION**

The present application claims priority to Chinese Patent Application with No. 202210329562.5, entitled "Method and Device for Calculating Creep Deformation of Finite-Length Cladding Tube, and Computer Device", and filed on March 31, 2022, the content of which is expressly incorporated herein by reference in its entirety.

**TECHNICAL FIELD**

The present application relates to a method and an apparatus for calculating a creep deformation of a finite-length cladding tube, a computer device, a storage medium, and a computer program product.

**BACKGROUND**

Fuel rod cladding creep collapse failure is one of the main causes of fuel rod failure. During the operation of a pressurized water reactor, the finite-length cladding tube may gradually deform inward due to a creep under the harsh high temperature-radiation-external pressure inside the reactor, causing the finite-length cladding tube to be flattened, and eventually leading to a creep collapse of the finite-length cladding tube, thereby losing the bearing capacity thereof and affecting the safe operation of the reactor. In order to ensure the reliability of engineering design and analysis of the fuel rod and improve the safety of the nuclear power plant, it is necessary to calculate the creep deformation of the finite-length cladding tube. In the conventional method, an infinite-length cladding tube is modeled through plane strain assumption, and a correction method for a deformation of a finite-length cladding tube is established to obtain the creep deformation of the finite-length cladding tube.

However, the deformation result of the finite-length cladding tube is corrected by the plane assumption of the infinite-length cladding tube, which may cause a certain error, and the correction coefficient in the conventional method is affected by structural parameters, so that it is difficult to obtain accurate creep deformation result of the finite-length cladding tube. Accordingly, how to improve the accuracy of the calculation of the creep deformation of the finite-length cladding tube becomes a technical problem that needs to be solved.

**SUMMARY**

According to the embodiments of the present invention, a method and an apparatus for calculating a creep deformation of a finite-length cladding tube, a computer device, a storage medium, and a computer program product are provided.

A method for calculating a creep deformation of a finite-length cladding tube is provided, including:

acquiring structural parameters of the finite-length cladding tube;
discretizing the structural parameters, and obtaining a finite element mesh model corresponding to the finite-length cladding tube;
calculating stiffness information and load information according to model parameters of the finite element mesh model and the structural parameters; and
calculating a creep deformation result of the finite-length cladding tube according to the stiffness information, the load information, a preset additional load vector, and a preset creep deformation calculation relationship.

In an embodiment, the calculating the stiffness information and the load information according to the model parameters of the finite element mesh model and the structural parameters includes:

acquiring a preset matrix;
calculating a global stiffness matrix according to the model parameters of the finite element mesh model and the preset matrix, and obtaining the stiffness information;
acquiring a first preset function and a second preset function; and
calculating the load information according to the model parameters of the finite element mesh model, the first preset function, the structural parameters, the preset matrix, and the second preset function.

In an embodiment, the calculating the global stiffness matrix according to the model parameters of the finite element mesh model and the preset matrix includes:

calculating an element stiffness matrix of each element in the finite element mesh model according to the model parameters of the finite element mesh model and the preset matrix; and

assembling element stiffness matrices of elements to obtain the global stiffness matrix.

In an embodiment, the calculating the load information according to the model parameters of the finite element mesh model, the first preset function, the structural parameters, the preset matrix, and the second preset function includes:

calculating the load vector according to the model parameters of the finite element mesh model, the first preset function, and a pressure difference between internal and external pressures in the structural parameters;

calculating an additional load vector increment caused by a creep according to the model parameters, the preset matrix, the structural parameters, and the second preset function; and

obtaining the load information according to the load vector and the additional load vector increment caused by the creep.

In an embodiment, the obtaining the load information according to the load vector and the additional load vector increment caused by the creep comprises:

determining the load vector and the additional load vector increment caused by the creep as the load information.

In an embodiment, the calculating the creep deformation result of the finite-length cladding tube according to the stiffness information, the load information, the preset additional load vector, and the preset creep deformation calculation relationship comprises:

calculating a node displacement of a major axis and a node displacement of a minor axis of a cross section in the middle of the finite-length cladding tube according to the stiffness information, the load information, the preset additional load vector, and the preset creep deformation relationship;

calculating a variation result of an ellipticity of the finite-length cladding tube according to the node displacement of the major axis and the node displacement of the minor axis of the cross section in the middle of the finite-length cladding tube; and

obtaining the creep deformation result according to the node displacement of the major axis and the node displacement of the minor axis of the cross section in the middle of the finite-length cladding tube, and the variation result of the ellipticity.

In an embodiment, the the creep deformation result comprises a creep displacement curve and an ellipticity variation curve, the method further comprises:

acquiring the structural parameters of the finite-length cladding tube at a current moment;

discretizing the structural parameters at the current moment to obtain the finite element mesh model corresponding to the finite-length cladding tube at the current moment;

calculating current stiffness information and current load information according to the model parameters of the finite element mesh model corresponding to the current moment and the structural parameters at the current moment;

calculating the creep deformation result of the finite-length cladding tube at the current moment according to the current stiffness information, the current load information, the preset additional load vector, and the preset creep deformation calculation relationship; and

returning to the step of acquiring the structural parameters of the finite-length cladding tube at the current moment, updating the current moment to a next moment, calculating the creep deformation result of the finite-length cladding tube at the next moment, continuing the calculation until the creep deformation result of the finite-length cladding tube at the end of a service life is calculated, and obtaining the creep displacement curve and the ellipticity variation curve of the finite-length cladding tube.

An apparatus for calculating a creep deformation of a finite-length cladding tube is provided, including:

a parameter acquisition module, configured to acquire structural parameters of the finite-length cladding tube;

a discretization processing module, configured to discretize the structural parameters, and obtain a finite element mesh model corresponding to the finite-length cladding tube;

an information calculation module, configured to calculate stiffness information and load information according to model parameters of the finite element mesh model and the structural parameters; and

a deformation calculation module, configured to calculate a creep deformation result of the finite-length cladding tube according to the stiffness information, the load information, a preset additional load vector, and a preset creep deformation calculation relationship.

In an embodiment, the the information calculation module is configured to: acquire a preset matrix; calculate a global stiffness matrix according to the model parameters of the finite element mesh model and the preset matrix, and obtain stiffness information; acquire a first preset function and a second preset function; calculate the load information according to the model parameters of the finite element mesh model, the first preset function, the structural parameters, the preset matrix, and the second preset function.

In an embodiment, the information calculation module is configured to calculate an element stiffness matrix of each element in the finite element mesh model according to the model parameters of the finite element mesh model and the preset matrix, and assemble element stiffness matrices of elements to obtain the global stiffness matrix.

In an embodiment, the information calculation module is configured to: calculate the load vector according to the model parameters of the finite element mesh model, the first preset function, and a pressure difference between internal and external pressures in the structural parameters; calculate an additional load vector increment caused by a creep according to the model parameters, the preset matrix, the structural parameters, and the second preset function; and obtain the load information according to the load vector and the additional load vector increment caused by the creep.

In an embodiment, the information calculation module is configured to determine the load vector and the additional load vector increment caused by the creep as the load information.

In an embodiment, the deformation calculation module is configured to: calculate a node displacement of a major axis and a node displacement of a minor axis of a cross section in the middle of the finite-length cladding tube according to the stiffness information, the load information, the preset additional load vector, and the preset creep deformation relationship; calculate a variation result of an ellipticity of the finite-length cladding tube according to the node displacement of the major axis and the node displacement of the minor axis of the cross section in the middle of the finite-length cladding tube; and obtain the creep deformation result according to the node displacement of the major axis and the node displacement of the minor axis of the cross section in the middle of the finite-length cladding tube, and the variation result of the ellipticity.

In an embodiment, the creep deformation result comprises a creep displacement curve and an ellipticity variation curve,

the parameter acquisition module is further configured to acquire the structural parameters of the finite-length cladding tube at a current moment;

the discretization processing module is further configured to discretize the structural parameters at the current moment to obtain the finite element mesh model corresponding to the finite-length cladding tube at the current moment;

the information calculation module is further configured to calculate current stiffness information and current load information according to the model parameters of the finite element mesh model corresponding to the current moment and the structural parameters at the current moment;

the deformation calculation module is further configured to calculate the creep deformation result of the finite-length cladding tube at the current moment according to the current stiffness information, the current load information, the preset additional load vector, and the preset creep deformation calculation relationship; and

a curve output module is configured to return to the step of acquiring the structural parameters of the finite-length cladding tube at the current moment, update the current moment to a next moment, calculate the creep deformation result of the finite-length cladding tube at the next moment, continue the calculation until the creep deformation result of the finite-length cladding tube at the end of a service life is calculated, and obtain the creep displacement curve and the ellipticity variation curve of the finite-length cladding tube.

A computer device is provided, including one or more processors and a memory storing computer-readable instructions; the computer-readable instructions, when executed by the one or more processors, cause the one or more processors to implement the steps of:

acquiring structural parameters of the finite-length cladding tube;

discretizing the structural parameters, and obtaining a finite element mesh model corresponding to the finite-length cladding tube;

calculating stiffness information and load information according to model parameters of the finite element mesh model and the structural parameters; and

calculating a creep deformation result of the finite-length cladding tube according to the stiffness information, the load information, a preset additional load vector, and a preset creep deformation calculation relationship.

In an embodiment, the one or more processors are further configured to be capable of executing the stored computer-readable instructions to: acquire a preset matrix; calculate a global stiffness matrix according to the model parameters of the finite element mesh model and the preset matrix, and obtain the stiffness information; acquire a first preset function and a second preset function; and calculate the load information according to the model parameters of the finite element mesh model, the first preset function, the structural parameters, the preset matrix, and the second preset function.

In an embodiment, the one or more processors are further configured to be capable of executing the stored computer-readable instructions to: calculate an element stiffness matrix of each element in the finite element mesh model according to the model parameters of the finite element mesh model and the preset matrix; and assemble element stiffness matrices of elements to obtain the global stiffness matrix.

In an embodiment, the one or more processors are further configured to be capable of executing the stored computer-readable instructions to: calculate the load vector according to the model parameters of the finite element mesh model, the first preset function, and a pressure difference between internal and external pressures in the structural parameters; calculate an additional load vector increment caused by a creep according to the model parameters, the preset matrix, the structural parameters, and the second preset function; and obtain the load information according to the load vector and the additional load vector increment caused by the creep.

One or more computer storage media are provided, on which computer-readable instructions are stored; the one or more computer storage media, when executed by one or more processors, cause the one or more processors to implement the the steps of:

> acquiring structural parameters of the finite-length cladding tube;
> discretizing the structural parameters, and obtaining a finite element mesh model corresponding to the finite-length cladding tube;
> calculating stiffness information and load information according to model parameters of the finite element mesh model and the structural parameters; and
> calculating a creep deformation result of the finite-length cladding tube according to the stiffness information, the load information, a preset additional load vector, and a preset creep deformation calculation relationship.

A computer program product is provided, including a computer program; the computer program, when executed by a processor, causes the processor to implement the the steps of:

> acquiring structural parameters of the finite-length cladding tube;
> discretizing the structural parameters, and obtaining a finite element mesh model corresponding to the finite-length cladding tube;
> calculating stiffness information and load information according to model parameters of the finite element mesh model and the structural parameters; and
> calculating a creep deformation result of the finite-length cladding tube according to the stiffness information, the load information, a preset additional load vector, and a preset creep deformation calculation relationship.

The details of one or more embodiments of the present invention are set forth in the accompanying drawings and the description below. Other features and advantages of the present application will be apparent from the description, drawings, and claims.

## BRIEF DESCRIPTION OF THE DRAWINGS

In order to more clearly illustrate the technical solution described in the embodiments of the present invention or the conventional technology, accompanying drawings required for describing the embodiments or the conventional technology are briefly introduced below. Obviously, the drawings described below are merely embodiments of the present invention, and those skilled in the art can obtain other drawings based on the disclosed drawings without any creative work.

> FIG. 1 is a flow chart showing a method for calculating a creep deformation of a finite-length cladding tube according to one or more embodiments.
> FIG. 2 is a flow chart of steps of calculating stiffness information and load information based on model parameters of a finite element mesh model and structural parameters according to one or more embodiments.
> FIG. 3 is a flow chart showing a method for calculating a creep deformation of a finite-length cladding tube according to another or more embodiments.
> FIG. 4 is a schematic diagram of a variation curve of a pressure difference between internal and external pressures of a finite-length cladding tube as a function of irradiation time according to one or more embodiments.
> FIG. 5 is a schematic diagram of a variation curve of a temperature of a finite-length cladding tube as a function of irradiation time according to one or more embodiments.
> FIG. 6 is a schematic diagram of a variation curve of a neutron fluence rate of a finite-length cladding tube as a function of irradiation time according to one or more embodiments.

FIG. 7 is a schematic structure diagram of an 8-node finite element mesh model according to one or more embodiments.

FIG. 8 (a) is a schematic diagram of a variation curve of displacement of a shot axis of a cross section in a middle of the finite-length cladding tube along an axial direction as a function of irradiation time when an initial ellipticity $e_0$ is equal to 0.1 according to one or more embodiments.

FIG. 8 (b) is a schematic diagram of a variation curve of displacement of a major axis of a cross section in a middle of the finite-length cladding tube along an axial direction as a function of irradiation time when an initial ellipticity $e_0$ is equal to 0.1 according to one or more embodiments.

FIG. 9 is a schematic diagram of a variation curve of an ellipticity of a cross section in a middle of a finite-length cladding tube as a function of irradiation time under different initial ellipticities according to one or more embodiments.

FIG. 10 is a schematic diagram of a variation curve of displacement of the largest node on the cross section in a middle of a finite-length cladding tube as a function of irradiation time according to one or more embodiments.

FIG. 11 is a block diagram illustrating an apparatus for calculating a creep deformation of a finite-length cladding tube according to one or more embodiments.

FIG. 12 is a block diagram of a computer device according to one or more embodiments.

## DETAILED DESCRIPTION

The technical solution in the embodiments of the present invention will be clearly and completely described below in conjunction with the drawings in the embodiments of the present invention. Obviously, the described embodiments are merely some embodiments of the present invention, rather than all of the embodiments. Based on the embodiments in the present application, all other embodiments obtained by those skilled in the art without any creative work shall fall within the scope of protection of the present application.

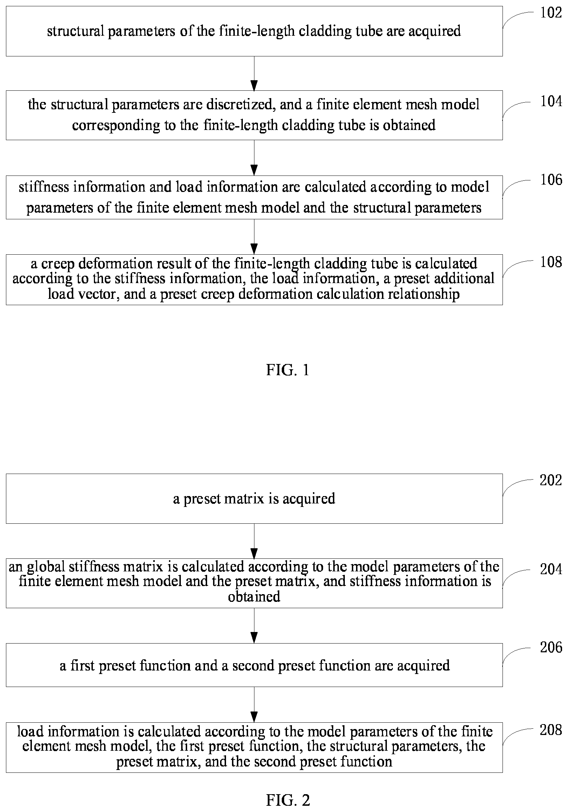

In an embodiment, as shown in FIG. 1, a method for calculating a creep deformation of a finite-length cladding tube is provided. In the embodiment, the method is applied to a terminal as an example for illustration. It should be appreciated that the method may also be applied to a server, or to a system including a terminal and a server, and implemented through the interaction between the terminal and the server. In the embodiment, the method may include the following steps.

Step 102: structural parameters of the finite-length cladding tube are acquired.

The finite-length cladding tube refers to a cladding tube of a finite-length fuel rod in a reactor, which is configured to support a fissile fuel in a fuel assembly. The finite-length cladding tube has a tubular structure. For example, the finite-length cladding tube may be a zirconium alloy thick-walled circular tube with an initial ellipticity. The initial ellipticity is caused by a manufacturing error.

When the creep deformation of the finite-length cladding tube is calculated, it is necessary to obtain the structural parameters of the finite-length cladding tube. The structural parameters may be input into the terminal in advance. The structural parameters may include geometric parameters, material parameters, irradiation parameters, etc., of the finite-length cladding tube. The geometric parameters may include an axial height, a cross-sectional thickness, inner and outer diameters, and an ellipticity of the finite-length cladding tube. The material parameters may include an elastic modulus, a Poisson's ratio, and a creep parameter, etc. The irradiation parameters may include a pressure difference between internal and external pressures, a temperature, and a neutron fluence rate, etc.

Step 104: the structural parameters are discretized, and a finite element mesh model corresponding to the finite-length cladding tube is obtained.

The terminal performs the discretization on the structural parameters. The discretization belongs to a pre-processing operation process. The terminal processes the finite-length cladding tube into a discrete geometric model by discretizing the structural parameters. The discrete geometric model may also be referred to as a finite element mesh model. For example, the finite element mesh model is an 8-node finite element mesh model.

Step 106: stiffness information and load information are calculated according to model parameters of the finite element mesh model and the structural parameters.

The model parameters of the finite element mesh model may include the number of meshes and the number of nodes in an axial direction, a circumferential direction and a radial direction of a three-dimensional finite-length cladding tube, the number of elements, a total number of nodes, and the number of degrees of freedom of the three-dimensional finite-length cladding tube. The nodes are calculating points that define each finite element shape function. The number of elements = the number of meshes in the axial direction × the number of meshes in the circumferential direction × the number of meshes in the radial direction, the total number of nodes = the number of nodes in the axial direction × the number of nodes in the circumferential direction × the number of nodes in the radial direction, the number of degrees of freedom = the total number of nodes × the number of meshes in the radial direction.

The terminal calculates an element list and a node list according to the model parameters of the finite element mesh model, and calculates the stiffness information and the load information according to the element list, the node list and the structural parameters. The calculations of the element list and the node list are configured to define a calculation domain and map a geometry of the finite-length cladding tube into individual elements for the finite element method. The arrangement mode of the elements exists in the element list, and information of each node of the element exists in the node list.

The element list can be represented as:

{{element 1, contained node 1, contained node 2, contained node 3, ..., contained node 8},
{element 2, contained node 1, contained node 2, contained node 3, ..., contained node 8},
...,
{element $m$, contained node 1, contained node 2, contained node 3, ..., contained node 8}}.

The node list can be represented as:

{{node 1, $x$-coordinate of node 1, $y$-coordinate of node 1, $z$-coordinate of node 1},
{node 2, $x$-coordinate of node 2, $y$-coordinate of node 2, $z$-coordinate of node 2},
...,
{node $n$, $x$-coordinate of node $n$, $y$-coordinate of node $n$, $z$-coordinate of node $n$}}.

The stiffness information may include a global stiffness matrix which is a matrix obtained by assembling the stiffnesses of all elements. The load information may include a load vector, an additional load vector and an additional load vector increment caused by a creep.

Step 108: a creep deformation result of the finite-length cladding tube is calculated according to the stiffness information, the load information, a preset additional load vector, and a preset creep deformation calculation relationship.

The terminal acquires the preset creep deformation calculation relationship. The preset creep deformation calculation relationship refers to a calculation formula for calculating the creep deformation of the finite-length cladding tube. For example, the preset creep deformation calculation relationship is a system of linear equations.

The terminal inputs the calculated stiffness information, load information and the preset additional load vector into the preset creep deformation calculation relationship, calculates node displacements of the finite-length cladding tube, and then calculates a variation result of the ellipticity according to the node displacements, and then determines the node displacements and the variation result of the ellipticity as the creep deformation result of the finite-length cladding tube. The nodal displacements include a node displacement of the major axis and a node displacement of the minor axis of a cross section in the middle of the finite-length cladding tube.

Furthermore, the creep deformation result calculated by the terminal may be the creep deformation result of the finite-length cladding tube at each moment, including the creep deformation result of the finite-length cladding tube at the end of the service life thereof. The terminal may draw a curve according to the creep deformation results of the finite-length cladding tube from an initial moment to the end of service life thereof, and obtain a curve of the node displacement of the finite-length cladding tube with time and a curve of the ellipticity with time.

In the above-mentioned method for calculating the creep deformation of the finite-length cladding tube, the structural parameters of the finite-length cladding tube are discretized to obtain the finite element mesh model corresponding to the finite-length cladding tube, thereby calculating the stiffness information and the load information according to the model parameters of the finite element mesh model and the structural parameters, and then calculating the creep deformation result of the finite-length cladding tube according to the stiffness information, the load information, the preset additional load vector and the preset creep deformation calculation relationship. By establishing a creep deformation model of the finite-length cladding tube, i.e., the finite element mesh model, accurate creep deformation of the finite-length cladding tube can be obtained, thereby addressing the problem of high conservatism in the correction process from the deformation of the infinite-length cladding tube to the deformation of the finite-length cladding tube, while improving the reliability and rationality of the creep deformation and stress analysis of the finite-length fuel rod cladding tube, accordingly ensuring the reliability of cladding creep collapse analysis in design and verification of the fuel rods and improving the safety of the nuclear power plant.

In an embodiment, as shown in FIG. 2, the step 106 may include following steps.

Step 202: a preset matrix is acquired.

Step 204: a global stiffness matrix is calculated according to the model parameters of the finite element mesh model and the preset matrix, and stiffness information is obtained.

Step 206: a first preset function and a second preset function are acquired.

Step 208: load information is calculated according to the model parameters of the finite element mesh model, the first preset function, the structural parameters, the preset matrix, and the second preset function.

The global stiffness matrix is a matrix obtained by assembling the stiffness of all elements. The load information may include a load vector and an additional load vector increment caused by a creep.

The terminal acquires the preset matrix which may include a strain matrix and an elasticity matrix. Both the strain matrix and the elasticity matrix are known matrices. The model parameters of the finite element mesh model may include the number of elements and the total number of nodes. The terminal can calculate the element list and the node list according to the model parameters of the finite element mesh model, and calculate the stiffness information and the load information according to the element list, the node list, and the structural parameters. The arrangement mode of the elements exists in the element list, and information of each node of the element exists in the node list.

The terminal calculates an element stiffness matrix of each element in the element list according to the preset matrix, and then assembles the element stiffness matrices of all elements to obtain the global stiffness matrix. The global stiffness matrix serves as the stiffness information. In addition, the terminal also needs to calculate the load information. In the embodiment, in order to calculate the load information, the terminal acquires the first preset function and the second preset function. The first preset function is configured to calculate the load vector, and the second preset function is configured to calculate the additional load vector increment caused by the creep. The structural parameters of the finite-length cladding tube may include a pressure difference between the internal and external pressures. The terminal calculates the load vector according to the model parameters of the finite element mesh model, the first preset function, and the pressure difference between the internal and external pressures, calculates the additional load vector increment caused by the creep according to the preset matrix, the structural parameters, and the second preset function, and then obtains the load information according to the load vector and the additional load vector increment caused by the creep.

It should be noted that there is no limitation on the order of the calculations of the stiffness information and the load information, which may be calculated simultaneously, or the stiffness information may be calculated first or the load information may be calculated first.

In the embodiment, by establishing the finite element mesh model, the global stiffness matrix can be calculated according to the model parameters of the finite element mesh model and the preset matrix, to obtain the accurate stiffness information. Further, the accurate load information can also be calculated according to the model parameters of the finite element mesh model, the first preset function, the structural parameters, the preset matrix, and the second preset function.

In an embodiment, the step 204 that the global stiffness matrix is calculated according to the model parameters of the finite element mesh model and the preset matrix may include that the element stiffness matrix of each element in the finite element mesh model is calculated according to the model parameters of the finite element mesh model and the preset matrix, the element stiffness matrices of elements are assembled to obtain the global stiffness matrix.

The terminal calculates the element list according to the model parameters of the finite element mesh model. The element list includes arrangement information of a plurality of elements. The preset matrix may include a strain matrix and an elasticity matrix. Both the strain matrix and the elasticity matrix are known matrices.

The terminal acquires an element stiffness matrix calculation relationship, and calculates the element stiffness matrix of each element in the element list according to the model parameters of the finite element mesh model, the strain matrix, the elasticity matrix, and the element stiffness matrix calculation relationship. The element stiffness matrix calculation relationship is a calculation formula for the element stiffness matrix, which can be expressed as:

$$[K]^e = \int_V [B]^{\mathrm{T}} [D][B] dV \qquad (1)$$

where $[K]^e$ represents the element stiffness matrix, $B$ represents the strain matrix, $[B]^{\mathrm{T}}$ represents a transposed matrix of the strain matrix, and $D$ represents the elasticity matrix.

The model parameters of the finite element mesh model may include a degree of freedom. The terminal assembles the element stiffness matrices of the elements according to the degrees of freedom to obtain the global stiffness matrix with rows and columns equal to the number of degrees of freedom. The global stiffness matrix can be expressed as:

$$[K]^t = \sum [K]^e \qquad (2)$$

where $[K]^t$ represents the global stiffness matrix at moment $t$.

In the embodiment, the element stiffness matrix of each element in the finite element mesh model is calculated according to the model parameters of the finite element mesh model and the preset matrix, and the element stiffness matrices of the elements are assembled to obtain a more accurate global stiffness matrix.

In an embodiment, the step 208 may include: the load vector is calculated according to the model parameters of the finite element mesh model, the first preset function, and the pressure difference between the internal and external pressures in the structural parameters; the additional load vector increment caused by the creep is calculated according to the model parameters, the preset matrix, the structural parameters, and the second preset function; and the load information is obtained according to the load vector and the additional load vector increment caused by the creep.

The first preset function is configured to calculate the load vector, and the first preset function is a shape function. The second preset function is configured to calculate the additional load vector increment caused by the creep, and the second preset function is a creep increment calculation function.

The terminal can acquire the load vector calculation relationship. A loading surface is determined according to the model parameters of the finite element mesh model, and an initial vector of each loading surface in the finite element mesh model is calculated according to the node list corresponding to the finite element mesh model, the first preset function, the pressure difference between the internal and external pressures in the structural parameters, and the load vector calculation relationship. The initial vectors of all loading surfaces are assembled to obtain the load vector. The load vector calculation relationship can be expressed as:

$$\{f^l\} = \int_A [N]^{\mathrm{T}}\{p\}dA \qquad\qquad (3)$$

where $\{f^l\}$ represents the load vector, $N$ represents the shape function, N=1/8(1+/-x)(1+/-y)(1+/-z), $x$, $y$, $z$ respectively represent the $x$-coordinate, $y$-coordinate and $z$-coordinate of each node in the node list, $[N]^{\mathrm{T}}$ represents the transposed matrix of the shape function, and $p$ represents the pressure difference between the internal and external pressures (generally, external pressure > internal pressure).

The terminal calculates each loading surface in the finite element mesh model according to the formula (3), and finally obtains the load vector through the assembling.

The preset matrix may include a strain matrix and an elasticity matrix. The terminal determines a stress according to the strain matrix and the elasticity matrix, calculates the creep increment according to the stress, the structural parameters and the second preset function, and thus calculates the additional load vector increment caused by the creep according to the strain matrix and the creep increment. In an embodiment, the step that the load information is obtained according to the load vector and the additional load vector increment caused by the creep may include: the load vector and the additional load vector increment caused by the creep are determined as the load information.

Furthermore, the stress can be expressed as $\{\sigma\} = [D]\{\varepsilon\} = [D][B]\{u^0\}$, where $D$ represents the elasticity matrix, $\{\varepsilon\}$ represents the strain, $B$ represents the strain matrix, and $\{u^0\}$ represents the node displacement, which is unknown.

The creep constitutive relation is a function of a stress, a temperature, a neutron fluence, etc., that is, a creep rate $\dot{\varepsilon}^c = f(\sigma, T, \phi, ...)$. For example, a creep constitutive model of the Limback-Andersson model can be adopted to divide the creep rate $\dot{\varepsilon}^c$ into two parts: a thermal creep rate $\dot{\varepsilon}^{th}$ and an irradiation creep rate $\dot{\varepsilon}^{irr}$. Accordingly, the following second preset function, i.e., the creep increment calculation function, can be obtained as:

$$\triangle\varepsilon^c = \dot{\varepsilon}^c * \triangle t$$

$$\dot{\varepsilon}^c = (\dot{\varepsilon}^{th} + \dot{\varepsilon}^{irr})$$

$$\dot{\varepsilon}^{th} = A\frac{E}{T}\left(\sinh\frac{a_i\sigma_{eff}}{E}\right)^n \exp\left(\frac{-Q}{RT}\right)$$

$$\dot{\varepsilon}^{irr} = C_0\phi^{C_1}\sigma_{eff}^{c_2}f(T) \qquad\qquad (4)$$

where $\triangle\varepsilon^c$ represents the creep increment, $\dot{\varepsilon}^c$ represents the creep rate, $\triangle t$ represents the time increment, $\dot{\varepsilon}^{th}$ represents the thermal creep rate, $\dot{\varepsilon}^{irr}$ represents the irradiation creep rate, $A$ represents a thermal creep coefficient, $E$ represents an elastic modulus, $T$ represents the temperature, $sinh$ represents a hyperbolic sine function, $\sigma_{eff}$ represents an equivalent stress, i.e., the stress $\{\sigma\}$ obtained by the above calculation, $\varphi$ represents a fast neutron fluence rate, $Q$, $R$, $C_0$ are all coefficients, $A$, $E$, $Q$, $R$, $C_0$, $a_i$, $c_1$, $c_2$, $f(T)$ are all structural parameters of the finite-length cladding tube, which are known parameters.

The terminal can determine the loading surface according to the model parameters of the finite element mesh model, calculate, according to the strain matrix and the creep increment, the initial additional load vector increment caused by the creep of each loading surface in the finite element mesh model, and assemble the initial additional load vector increments of all loading surfaces to obtain the additional load vector increment.

The calculation formula for the initial additional load vector increment can be expressed as:

$$\{\triangle f^c\} = \int_V [B]^T \{\triangle \varepsilon^c\}) dV \tag{5}$$

where $\{\triangle f^c\}$ represents the initial additional load vector increment caused by the creep, $B$ represents the strain matrix, $[B]^T$ represents the transposed matrix of the strain matrix, and $\triangle \varepsilon^c$ represents the creep increment.

In the embodiment, since the finite element mesh model is established, the load vector calculated according to the model parameters of the finite element mesh model, the first preset function and the pressure difference between the internal and external pressures in the structural parameters, and the additional load vector increment caused by the creep and calculated according to the model parameters, the preset matrix, the structural parameters and the second preset function are more accurate.

In an embodiment, the step 108 may include: the node displacement of the major axis and the node displacement of the minor axis of the cross section in the middle of the finite-length cladding tube are calculated according to the stiffness information, the load information, the preset additional load vector, and the preset creep deformation relationship; the variation result of the ellipticity of the finite-length cladding tube is calculated according to the node displacement of the major axis and the node displacement of the minor axis of the cross section in the middle of the finite-length cladding tube; and the creep deformation result is obtained according to the node displacement of the major axis and the node displacement of the minor axis of the cross section in the middle of the finite-length cladding tube, and the variation result of the ellipticity.

The preset additional load vector refers to an initial additional load vector. The preset creep deformation relationship refers to a calculation formula for a creep deformation.

The terminal substitutes the calculated stiffness information, load information and the acquired preset additional load vector into the preset creep deformation relationship to calculate displacements of all nodes in the finite element mesh model, and determines the node displacement of the major axis and the node displacement of the minor axis of the cross section in the middle of the finite-length cladding tube from the calculated node displacements. The preset creep deformation relationship can be expressed as follows:

$$[K]^t \{u^0\}^t = \{f^l\}^t + \{f^c + \triangle f^c\}^t \tag{6}$$

where, $[K]^t$ represents the global stiffness matrix, $\{u^0\}^t$ represents the node displacement, i.e., the node displacement of the major axis and the node displacement of the minor axis of the cross section in the middle of the finite-length cladding tube, which is unknown, $\{f^l\}^t$ represents the load vector, $f^c$ represents the preset additional load vector, and $\{f^c + \triangle f^c\}^t$ represents the sum of the preset additional load vector and the additional load vector increment.

The terminal can solve the formula (6) through the Gaussian elimination method or Successive Over Relaxation (SOR) iteration method to obtain the node displacement of the finite-length cladding tube.

The terminal acquires an initial ellipticity which refers to a difference between an outer diameter of the major axis and an outer diameter of the minor axis of the elliptical cross section. The variation result of the ellipticity of the finite-length cladding tube is calculated according to the initial ellipticity, the node displacement of the major axis and the node displacement of the minor axis of the cross section in the middle. The variation result of the ellipticity can be expressed as $2 \times (d_l - d_s) + e_0$, $d_l$ represents the node displacement of the major axis of the cross section in the middle, $d_s$ represents the node displacement of the minor axis of the cross section in middle, and $e_0$ represents the initial ellipticity. Accordingly, the terminal determines the node displacement of the major axis and the node displacement of the minor axis of the cross section in the middle, and the variation result of the ellipticity as the creep deformation result.

In the above embodiment, since the stiffness information and load information calculated by the finite element mesh model are accurate, the node displacements of the major axis and the minor axis of the cross section in the middle and the variation result of the ellipticity calculated thereby are also accurate.

In an embodiment, the creep deformation result includes a creep displacement curve and an ellipticity variation curve. The above mentioned method may further include: the structural parameters of the finite-length cladding tube at a current moment are acquired; the structural parameters at the current moment are discretized to obtain the finite element mesh model corresponding to the finite-length cladding tube at the current moment; the current stiffness information and the current load information are calculated according to the model parameters of the finite element mesh model corresponding to the current moment and the structural parameters at the current moment; the creep deformation result of the finite-length cladding tube at the current moment is calculated according to the current stiffness information, the current load information and the preset creep deformation calculation relationship; the step of acquiring the structural parameters of the finite-length cladding tube at the current moment is returned, the current moment is updated to a next moment, the creep deformation result of the finite-length cladding tube at the next moment is calculated, the calculation is not stopped until the creep deformation result of the finite-length cladding tube at the end of the service life is calculated, and then the creep displacement curve and ellipticity variation curve of the finite-length cladding tube are obtained.

During the operation of the pressurized water reactor, the creep deformation of the finite-length cladding tube needs to be calculated in real time. Accordingly, in the embodiment, the terminal needs to calculate the creep deformation result of the finite-length cladding tube at each moment. At the current moment, after calculating the creep deformation result, the terminal may return to the step of acquiring the structural parameters of the finite-length cladding tube at the current moment, update the time increment, and update the current moment to the next moment. The next moment can be expressed as the current moment t + the time increment $\Delta t$ ($t+\Delta t$). The creep deformation result at the next moment is calculated in this way until the creep deformation result of the finite-length cladding tube at the end of the service life is calculated, thereby obtaining the creep deformation result changing with time. The creep deformation result changing with time includes: a variation curve of the node displacement of the major axis of the cross section in the middle of the finite-length cladding tube with time, a variation curve of the node displacement of the minor axis of the cross section in the middle of the finite-length cladding tube with time, and a variation curve of the ellipticity with time.

In the above embodiment, the finite-length cladding model is established, the accurate fuel rod cladding creep deformation can be obtained, and accordingly, an accurate variation curve of the creep deformation result with time can be obtained, meanwhile, data support can be provided for subsequent nuclear power operations, and the safety of nuclear power plant is improved.

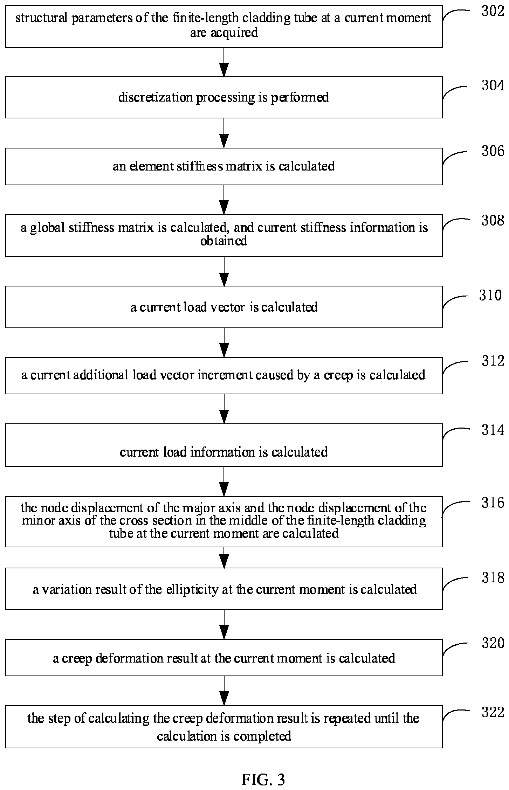

In another embodiment, as shown in FIG. 3, a method for calculating a creep deformation of a finite-length cladding tube is provided, the method may include the following steps.

Step 302: structural parameters of the finite-length cladding tube at a current moment are acquired.

Step 304: discretization processing is performed.

The structural parameters at the current moment are discretized to obtain a finite element mesh model corresponding to the finite-length cladding tube at the current moment.

Step 306: an element stiffness matrix is calculated.

The element stiffness matrix of each element in the finite element mesh model is calculated according to the model parameters of the finite element mesh model and the preset matrix.

Step 308: a global stiffness matrix is calculated, and current stiffness information is obtained.

The element stiffness matrices of the elements are assembled to obtain the global stiffness matrix as the current stiffness information.

Step 310: a current load vector is calculated.

The current load vector is calculated according to the model parameters, the first preset function, and the pressure difference between the internal and external pressures in the structural parameters.

Step 312: a current additional load vector increment caused by a creep is calculated.

The current additional load vector increment caused by the creep is calculated according to the model parameters, the preset matrix, the structural parameters, and the second preset function.

Step 314: current load information is calculated.

The current load information is obtained according to the current load vector and the current additional load vector increment caused by the creep.

Step 316: the node displacement of the major axis and the node displacement of the minor axis of the cross section in the middle of the finite-length cladding tube at the current moment are calculated.

The node displacement of the major axis and the node displacement of the minor axis of the cross section in the middle of the finite-length cladding tube at the current moment are calculated according to the current stiffness information, the current load information, the preset additional load vector, and the preset creep deformation relationship.

Step 318: a variation result of the ellipticity at the current moment is calculated.

The variation result of the ellipticity of the finite-length cladding tube at the current moment is calculated according to the node displacement of the major axis and the node displacement of the minor axis of the cross section in the middle of the finite-length cladding tube at the current moment.

Step 320: a creep deformation result at the current moment is calculated.

The creep deformation result at the current moment is obtained according to the node displacement of the major axis and the node displacement of the minor axis of the cross section in the middle of the finite-length cladding tube at the current moment, and the variation result of the ellipticity at the current moment.

Step 322: the step of calculating the creep deformation result is repeated until the calculation is completed.

The step of acquiring the structural parameters of the finite-length cladding tube at the current moment is returned to, the current moment is updated to the next moment, the creep deformation result of the finite-length cladding tube at the next moment is calculated, the calculation is not stopped until the creep deformation result of the finite-length cladding tube at the end of the service life thereof is calculated, and then the creep displacement curve and the ellipticity variation curve of the finite-length cladding tube are obtained.

The process of calculating the creep displacement curve and the ellipticity variation curve by the terminal in the embodiment is the same as the calculation process in the aforementioned embodiment, which will not be repeated here.

A finite-length fuel rod cladding tube is taken as an example below to illustrate the calculation process of the creep deformation in the above embodiment.

1. The structural parameters of the finite-length cladding tube at the current moment are acquired.

The structural parameters include geometric parameters, material parameters, irradiation parameters of the finite-length cladding tube, etc.

Geometric parameters include an axial height, a cross-sectional thickness, inner and outer diameters, an ellipticity, etc., of the finite-length fuel rod cladding tube. For example, the axial height is 10 mm, the cross-sectional thickness is 0.57 mm, the outer diameter is 9.75 mm, and the ellipticity is 0.1 mm.

Material parameters include an elastic modulus, a Poisson's ratio, creep parameters, etc., a determined material type, for example, Zr-4 alloy, the elastic modulus thereof is 78960MPa, the Poisson's ratio thereof is 0.346, the creep parameters thereof, i.e., material parameters in the creep constitutive model of the finite-length cladding tube, see the attached table.

Appendix Creep Parameters

| Parameter | Unit | Value |
|---|---|---|
| A | K/MPa/hr | 1.08E9 |
| E | MPA | 1.149-59.9T |
| $a_i$ | MPa$^{-1}$ | $650\{1-0.56[1-\exp(-1.4E-27\Phi^{1.2})]\}$ $\Phi$ = fast neutron fluence (n/cm$^2$) |
| n | / | 2.0 |
| Q | kJ/mol | 201 |
| R | kJ/mol/K | 0.008314 |
| $C_0$ | (n/m$^2$s)MPa$^{-a}$ | 4.0985E-24 |
| $C_1$ | / | 0.85 |
| $C_2$ | / | 1.0 |
| $f(T)$ | / | T<570K 0.7283 510<T<625K -7.0237+0.0136T T>625K 1.4763 |

Irradiation parameters include a pressure difference between internal and external pressures, a temperature, and a neutron fluence rate of the finite-length cladding tube corresponding to irradiation time.

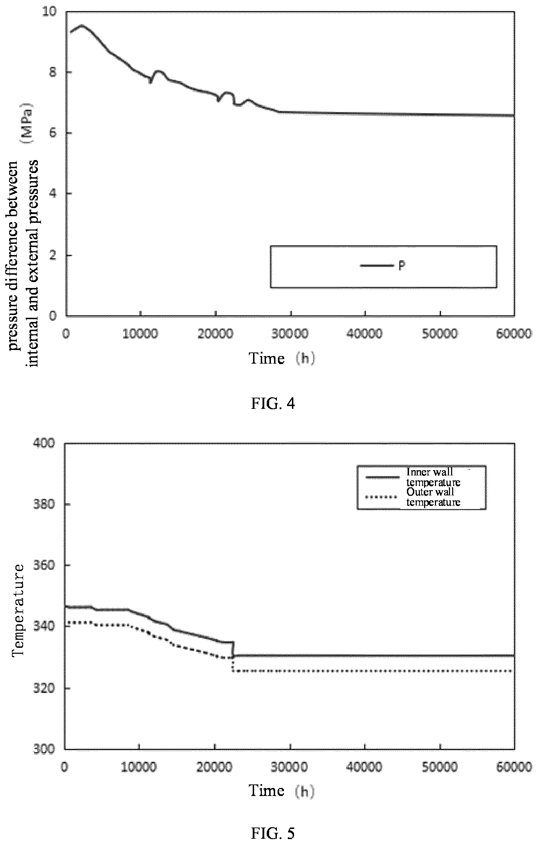

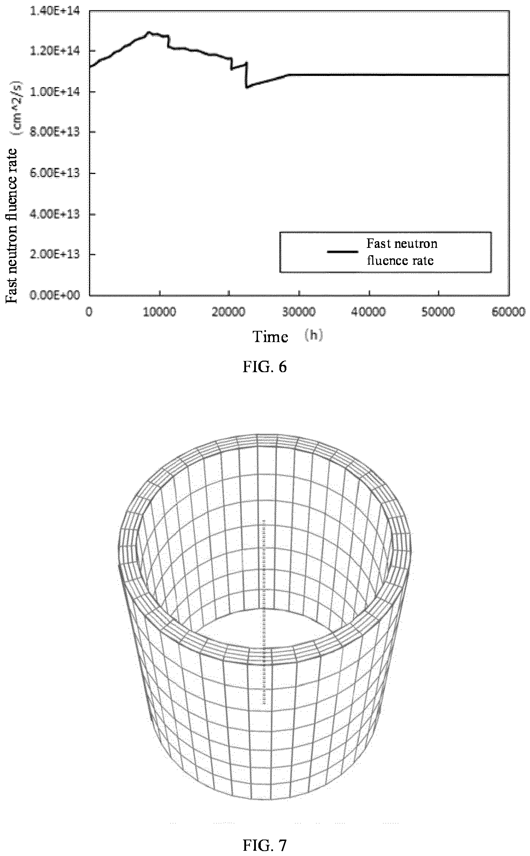

As shown in FIG. 4, it is a variation curve of the pressure difference between the internal and external pressures of the finite-length cladding tube with the irradiation time. FIG. 5 is a variation curve of the temperature of the finite-length cladding tube with the irradiation time. FIG. 6 is a variation curve of the neutron fluence rate of the finite-length cladding tube with the irradiation time.

2. The discretization processing is performed.

The finite-length cladding tube is discretized into a discrete geometric model. The discrete geometric model is an 8-node finite element mesh model, as shown in FIG. 7.

The model parameters of the 8-node finite element mesh model include the number of meshes and the number of nodes in the axial, circumferential and radial directions of the three-dimensional finite-length cladding tube, the number of elements, the total number of nodes, and the number of degrees of freedom. The number of meshes in the axial direction is equal to 7, the number of nodes is equal to 8, the number of meshes and the number of nodes in the circumferential direction are both equal to 40, the number of meshes in the radial direction is equal to 3, the number of nodes is equal to 4, the number of elements is equal to 840 (=$7\times40\times3$), the total number of nodes is equal to 1280 (=$8\times40\times4$), and the number of degrees of freedom is equal to 3840 (=$1280\times3$).

The element list calculated according to the model parameters of the 8-node finite element mesh model is as follows:

{{element 1, contained node 1, contained node 2, contained node 3, ..., contained node 8},
{element 2, contained node 1, contained node 2, contained node 3, ..., contained node 8},
...,
{element 840, contained node 1, contained node 2, contained node 3, ..., contained node 8} }.

The node list calculated according to the model parameters of the 8-node finite element mesh model is as follows:

{ {node 1, $x$-coordinate of node 1, $y$-coordinate of node 1, $z$-coordinate of node 1},
{node 2, $x$-coordinate of node 2, $y$-coordinate of node 2, $z$-coordinate of node 2},
...,
{node 1280, $x$-coordinate of node 1280, $y$-coordinate of node 1280, $z$-coordinate of node 1280}}.

3. The element stiffness matrix is calculated.

The element stiffness matrix is calculated according to formula (1). The element stiffness matrix is a $24\times24$ square matrix. The integral in the formula (1) is calculated numerically using the Gauss integral.

4. The global stiffness matrix is calculated and the current stiffness information is obtained.

The stiffness matrices of the elements are assembled according to the formula (2) to obtain the global stiffness matrix which is a square matrix of $3840\times3840$.

5. The current load vector is calculated.

An initial vector of each loading surface in the 8-node finite element mesh model is calculated according to the formula (3), and finally the initial vectors of all loading surfaces are assembled to obtain the load vector.

6. The current additional load vector increment caused by the creep is calculated.

The initial additional load vector increment of each loading surface caused by the creep in the 8-node finite element mesh model is calculated according to the formula (4) and formula (5), and the initial additional load vector increments of all loading surfaces are assembled to obtain the additional load vector increment.

7. The current load information is calculated.

The current load information is determined according to the current load vector and the current additional load vector increment caused by the creep.

8. The node displacement of the major axis and the node displacement of the minor axis of the cross section in the middle of the finite-length cladding tube at the current moment are calculated.

The preset creep deformation relationship expressed by the formula (6) is acquired, and the unknown is the node displacement. The calculated current stiffness information, current load information and the acquired preset additional load vector are substituted into the preset creep deformation relationship to obtain the node displacement of the finite-length cladding tube at the current moment by the Gaussian elimination method or Successive Over Relaxation (SOR) iteration method, from which the node displacement of the major axis and the node displacement of the minor axis of the cross section in the middle of the finite-length cladding tube are determined. The node displacement may further include a displacement of a maximum node on the cross section in the middle of the finite-length cladding tube.

9. The variation result of the ellipticity at the current moment is calculated.

The variation result of the ellipticity can be expressed as $2\times(d_l-d_s)+e_0$, where $d_i$ represents the node displacement of the major axis of the cross section in the middle of the finite-length cladding tube at the current moment, $d_s$ represents the node displacement of the minor axis of the cross section in the middle of the finite-length cladding tube at the current moment, and $e_0$ represents the initial ellipticity.

10. The creep deformation result at the current moment is calculated.

The node displacement of the major axis and the node displacement of the minor axis of the cross section in the middle of the finite-length cladding tube at the current moment, and the variation result of the ellipticity at the current moment are determined as the creep deformation result at the current moment.

11. The calculation step of the creep deformation result is repeated until the calculation is completed.

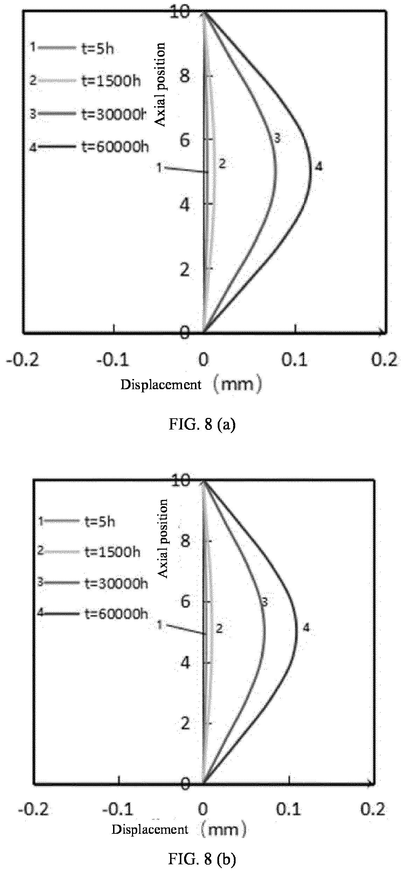

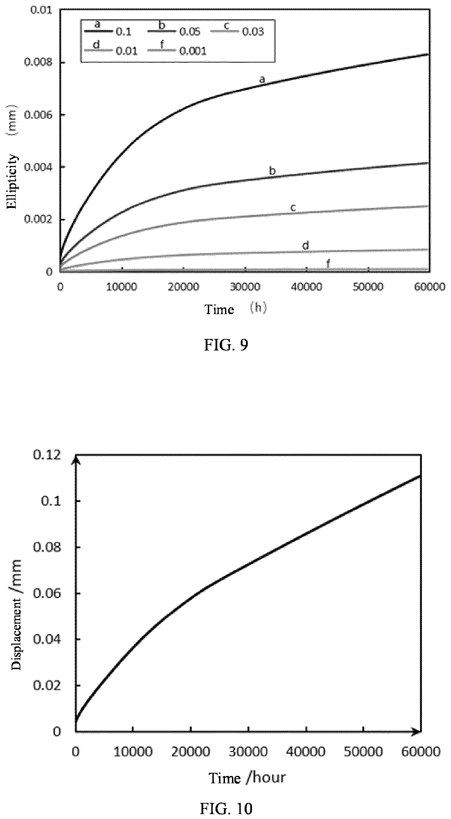

The above steps 1 to 10 are repeated, the creep deformation result at each moment is outputted, the calculation is not stopped until the creep deformation result of the finite-length cladding tube at the end of the service life thereof is calculated, and the creep displacement curve and the ellipticity variation curve of the finite-length cladding tube are output. The creep displacement curve includes the variation curve of the node displacement of the major axis and the variation curve of the node displacement of the minor axis of the cross section in the middle of the finite-length cladding tube as a function of the irradiation time. FIG. 8(a) shows the variation curve of the displacement of the minor axis of the cross section in the middle of the finite-length cladding tube in the axial direction as a function of the irradiation time, when the initial ellipticity $e_0$ is equal to 0.1. As shown in FIG. 8(b), it shows the variation curve of the displacement of the major axis of the cross section in the middle of the finite-length cladding tube in the axial direction as a function of the irradiation time, when the initial ellipticity $e_0$ is equal to 0.1. The displacement in the axial direction is the nodal displacement. As shown in FIG. 9, it shows a variation curve of the ellipticity of the cross section in the middle of the finite-length cladding tube as a function of the irradiation time under different initial ellipticities. In addition, the node displacement calculated by the terminal may further include the displacement of the maximum node on the cross section in the middle of the finite-length cladding tube. According to the above creep deformation calculation process, the variation curve of the displacement of the maximum node on the cross section in the middle of the finite-length cladding tube as a function of the irradiation time can also be output, as shown in FIG. 10.

It should be appreciated that, although the steps in the flow charts involved in the embodiments described above are displayed sequentially as indicated by arrows, these steps are not definitely executed sequentially in the order indicated by the arrows. Unless otherwise specified herein, there is no strict order limitation for the execution of these steps, and these steps may be executed in other orders. Moreover, at least a part of the steps in the flow charts involved in the embodiments described above may include multiple steps or multiple stages. These steps or stages are not definitely executed at the same moment, but can be executed at different moments. These steps or stages are not definitely executed sequential, but may be executed in turn or alternately with other steps or at least part of the steps or stages in other steps.

Based on the same inventive concept, in an embodiment of the present invention, an apparatus for calculating a creep deformation of a finite-length cladding tube is provided, which is configured to implement the above-mentioned method for calculating the creep deformation of the finite-length cladding tube. The solution to the problem provided by the apparatus is similar to the solution described in the above method. Therefore, as for the limitations in one or more embodiments of the apparatus for calculating the creep deformation of the finite-length cladding tube provided below, reference can be made to the limitations on the above-mentioned method for calculating the creep deformiton of the finite-length cladding tube, which will not be repeated here.

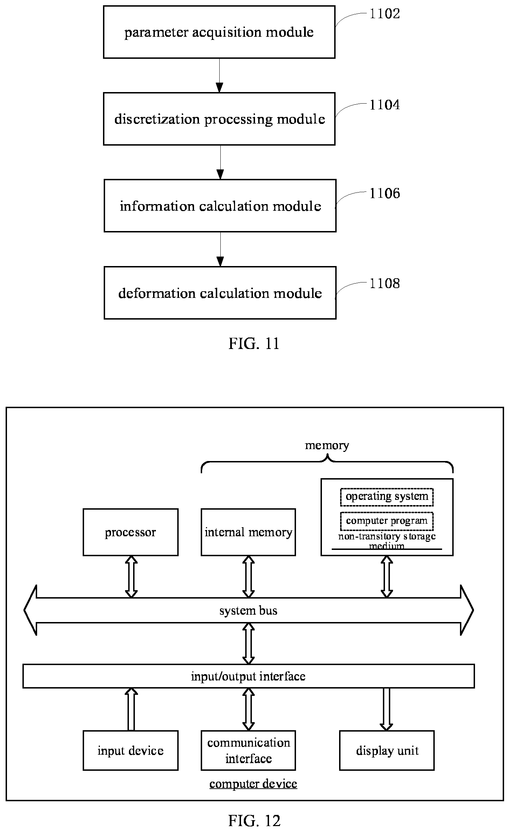

In an embodiment, as shown in FIG. 11, an apparatus for calculating a creep deformation of a finite-length cladding tube is provided, including: a parameter acquisition module 1102, a discretization processing module 1104, an information calculation module 1106, and a deformation calculation module 1108.

The parameter acquisition module 1102 is configured to acquire structural parameters of the finite-length cladding tube.

The discretization processing module 1104 is configured to discretize the structural parameters, and obtain a finite element mesh model corresponding to the finite-length cladding tube.

The information calculation module 1106 is configured to calculate stiffness information and load information according to model parameters of the finite element mesh model and the structural parameters.

The deformation calculation module 1108 is configured to calculate a creep deformation result of the finite-length cladding tube according to the stiffness information, the load information, a preset additional load vector, and a preset creep deformation calculation relationship.

In an embodiment, the information calculation module 1106 is configured to: acquire a preset matrix; calculate a global stiffness matrix according to the model parameters of the finite element mesh model and the preset matrix, and obtain stiffness information; acquire a first preset function and a second preset function; calculate the load information according to the model parameters of the finite element mesh model, the first preset function, the structural parameters, the preset matrix, and the second preset function.

In an embodiment, the information calculation module 1106 is configured to calculate an element stiffness matrix of each element in the finite element mesh model according to the model parameters of the finite element mesh model and the preset matrix, assemble the element stiffness matrices of elements to obtain the global stiffness matrix.

In an embodiment, the information calculation module 1106 is configured to: calculate the load vector according to the model parameters of the finite element mesh model, the first preset function, and the pressure difference between the internal and external pressures in the structural parameters; calculate an additional load vector increment caused by a creep according to the model parameters, the preset matrix, the structural parameters, and the second preset function; and obtain the load information according to the load vector and the additional load vector increment caused by the creep.

In an embodiment, the information calculation module 1106 is configured to determine the load vector and the additional load vector increment caused by the creep as the load information.

In an embodiment, the deformation calculation module 1108 is configured to: calculate a node displacement of a major axis and a node displacement of a minor axis of the cross section in the middle of the finite-length cladding tube according to the stiffness information, the load information, the preset additional load vector, and the preset creep deformation relationship; calculate a variation result of the ellipticity of the finite-length cladding tube according to the node displacement of the major axis and the node displacement of the minor axis of the cross section in the middle of the finite-length cladding tube; and obtain the creep deformation result according to the node displacement of the major axis and the node displacement of the minor axis of the cross section in the middle of the finite-length cladding tube, and the variation result of the ellipticity.

In an embodiment, the creep deformation result includes a creep displacement curve and an ellipticity variation curve. The above-mentioned apparatus may further include:

the parameter acquisition module 1102, configured to acquire the structural parameters of the finite-length cladding tube at a current moment;

the discretization processing module 1104, configured to discretize the structural parameters at the current moment to obtain the finite element mesh model corresponding to the finite-length cladding tube at the current moment;

the information calculation module 1106, configured to calculate the current stiffness information and the current load information according to the model parameters of the finite element mesh model corresponding to the current moment and the structural parameters at the current moment;

the deformation calculation module 1108, configured to calculate the creep deformation result of the finite-length cladding tube at the current moment according to the current stiffness information, the current load information, the preset additional load vector, and the preset creep deformation calculation relationship;

a curve output module, configured to return to the step of acquiring the structural parameters of the finite-length cladding tube at the current moment, update the current moment to a next moment, calculate the creep deformation result of the finite-length cladding tube at the next moment, continue the calculation until the creep deformation result of the finite-length cladding tube at the end of the service life is calculated, and obtain the creep displacement curve and the ellipticity variation curve of the finite-length cladding tube.

The modules in the above-mentioned apparatus for calculating the creep deformation of the finite-length cladding tube can be fully or partially implemented by software, hardware or a combination thereof. The above modules may be embedded in or independent of a processor in a computer device in the form of hardware, or may be stored in a memory in a computer device in the form of software, so that the processor can invoke and execute operations corresponding to the above modules.

In an embodiment, a computer device is provided. The computer device may be a terminal, and the internal structure diagram thereof may be as shown in FIG. 12. The computer device may include a processor, a memory, an input/output interface, a communication interface, a display unit and an input device. The processor, the memory and the input/output interface are connected to each other via a system bus, and the communication interface, the display unit and the input device are connected to the system bus via the input/output interface. The processor of the computer device is configured to provide computing and control capabilities. The memory of the computer device includes a non-transitory storage medium and an internal memory. The non-transitory storage medium stores an operating system and a computer program. The internal memory provides an environment for the operation of the operating system and computer programs in the non-transitory storage medium. The input/output interface of the computer device is configured to exchange information between the processor and an external device. The communication interface of the computer device is configured to communicate with an external terminal in a wired or wireless manner, and the wireless manner can be achieved through WIFI, mobile cellular network, near field communication (NFC) or other technologies. When the computer program is executed by a processor, a method for calculating a creep deformation of a finite-length cladding tube is implemented. The display unit of the computer device is configured to form a visually visible picture, and may be a display screen, a projection device or a virtual reality imaging device. The display screen may be a liquid crystal display screen or an electronic ink display screen, and the input device of the computer device may be a touch layer covering the display screen, or a button, trackball or touchpad provided on the housing of the computer device, or an external keyboard, touchpad or mouse, etc.

Those skilled in the art may understand that the structure shown in FIG. 12 is merely a block diagram of a partial structure related to the solution of the present application, and does not constitute a limitation on the computer device to which the solution of the present application is applied. The computer device may include more or fewer components than shown in the figure, or combine certain components, or have a different arrangement of components.

In an embodiment, a computer device is further provided, including one or more processors and a memory storing computer-readable instructions. The computer-readable instructions, when executed by the one or more processors, may cause the one or more processor to implement the steps in the above-mentioned method embodiments.

In an embodiment, one or more computer storage media storing computer-readable instructions are provided. The computer-readable instructions, when executed by one or more processors, may cause the one or more processor to implement the steps in the above-mentioned method embodiments.

**EP 4 502 852 A1**

The computer storage medium is a readable storage medium, and the readable storage medium may be non-transitory or transitory.

In an embodiment, a computer program product is provided, including a computer program. The computer program, when executed by a processor, may cause the processor to implement the steps in the above method embodiments.

It should be noted that the user information (including but not limited to user device information, user personal information, etc.) and data (including but not limited to data used for analysis, stored data, displayed data, etc.) involved in the present application are all information and data authorized by the user or fully authorized by all parties.

A person of ordinary skill in the art should understand that all or part of the processes in the above-mentioned method embodiments can be implemented by instructing related hardware through a computer program. The computer program can be stored in a non-transitory computer-readable storage medium. When the computer program is executed, the processes of the above-mentioned method embodiments are included. Any reference to a memory, a database, or other medium used in the embodiments provided in the present application may include at least one of a non-transitory memory and a transitory memory. The non-transitory memory may include a read-only memory (ROM), a magnetic tape, a floppy disk, a flash memory, an optical storage, a high-density embedded non-volatile memory, a resistive random access memory (ReRAM), a magnetoresistive random access memory (MRAM), a ferroelectric random access memory (FRAM), a phase change memory (PCM), a graphene memory, etc. The transitory memory may include a random access memory (RAM) or an external cache memory, etc. By way of illustration and not limitation, the RAM may be in various forms, such as a static random access memory (SRAM) or a dynamic random access memory (DRAM). The database involved in each embodiment provided in the present invention may include at least one of a relational database and a non-relational database. The non-relational database may include, but is not limited to, a distributed database based on blockchain. The processor involved in each embodiment provided in the present invention may be a general-purpose processor, a central processing unit, a graphics processor, a digital signal processor, a programmable logic unit, a data processing logic unit based on quantum computing, etc., which is not limited thereto.

The technical features in the above embodiments can be arbitrarily combined. In order to make the description concise, all possible combinations of the technical features in the above embodiments are not described. However, as long as there is no contradiction in the combinations of these technical features, these combinations should be regarded as falling within the scope of the present invention.

The above-described embodiments merely express several implementation modes of the present application, and the description thereof is relatively specific and detailed, but it should not be construed as limiting the scope of the present application. It should be pointed out that, those skilled in the art can make several modifications and improvements without departing from the concept of the present application, which all fall within the scope of protection of the present application. Therefore, the protection scope of the present application should be subject to the appended claims.

**Claims**

1. A method for calculating a creep deformation of a finite-length cladding tube, comprising:

   acquiring structural parameters of the finite-length cladding tube;
   discretizing the structural parameters, and obtaining a finite element mesh model corresponding to the finite-length cladding tube;
   calculating stiffness information and load information according to model parameters of the finite element mesh model and the structural parameters; and
   calculating a creep deformation result of the finite-length cladding tube according to the stiffness information, the load information, a preset additional load vector, and a preset creep deformation calculation relationship.

2. The method according to claim 1, wherein the calculating the stiffness information and the load information according to the model parameters of the finite element mesh model and the structural parameters comprises:

   acquiring a preset matrix;
   calculating a global stiffness matrix according to the model parameters of the finite element mesh model and the preset matrix, and obtaining the stiffness information;
   acquiring a first preset function and a second preset function; and
   calculating the load information according to the model parameters of the finite element mesh model, the first preset function, the structural parameters, the preset matrix, and the second preset function.

3. The method according to claim 2, wherein the calculating the global stiffness matrix according to the model parameters of the finite element mesh model and the preset matrix comprises:

> calculating an element stiffness matrix of each element in the finite element mesh model according to the model parameters of the finite element mesh model and the preset matrix; and
> assembling element stiffness matrices of elements to obtain the global stiffness matrix.

4. The method according to claim 2, wherein the calculating the load information according to the model parameters of the finite element mesh model, the first preset function, the structural parameters, the preset matrix, and the second preset function comprises:

> calculating the load vector according to the model parameters of the finite element mesh model, the first preset function, and a pressure difference between internal and external pressures in the structural parameters;
> calculating an additional load vector increment caused by a creep according to the model parameters, the preset matrix, the structural parameters, and the second preset function; and
> obtaining the load information according to the load vector and the additional load vector increment caused by the creep.

5. The method according to claim 4, wherein the obtaining the load information according to the load vector and the additional load vector increment caused by the creep comprises:
determining the load vector and the additional load vector increment caused by the creep as the load information.

6. The method according to any one of claims 1 to 5, wherein the calculating the creep deformation result of the finite-length cladding tube according to the stiffness information, the load information, the preset additional load vector, and the preset creep deformation calculation relationship comprises:

> calculating a node displacement of a major axis and a node displacement of a minor axis of a cross section in the middle of the finite-length cladding tube according to the stiffness information, the load information, the preset additional load vector, and the preset creep deformation relationship;
> calculating a variation result of an ellipticity of the finite-length cladding tube according to the node displacement of the major axis and the node displacement of the minor axis of the cross section in the middle of the finite-length cladding tube; and
> obtaining the creep deformation result according to the node displacement of the major axis and the node displacement of the minor axis of the cross section in the middle of the finite-length cladding tube, and the variation result of the ellipticity.

7. The method according to any one of claims 1 to 6, wherein the creep deformation result comprises a creep displacement curve and an ellipticity variation curve, the method further comprises:

> acquiring the structural parameters of the finite-length cladding tube at a current moment;
> discretizing the structural parameters at the current moment to obtain the finite element mesh model corresponding to the finite-length cladding tube at the current moment;
> calculating current stiffness information and current load information according to the model parameters of the finite element mesh model corresponding to the current moment and the structural parameters at the current moment;
> calculating the creep deformation result of the finite-length cladding tube at the current moment according to the current stiffness information, the current load information, the preset additional load vector, and the preset creep deformation calculation relationship; and
> returning to the step of acquiring the structural parameters of the finite-length cladding tube at the current moment, updating the current moment to a next moment, calculating the creep deformation result of the finite-length cladding tube at the next moment, continuing the calculation until the creep deformation result of the finite-length cladding tube at the end of a service life is calculated, and obtaining the creep displacement curve and the ellipticity variation curve of the finite-length cladding tube.

8. An apparatus for calculating a creep deformation of a finite-length cladding tube, comprising:

> a parameter acquisition module, configured to acquire structural parameters of the finite-length cladding tube;
> a discretization processing module, configured to discretize the structural parameters, and obtain a finite element mesh model corresponding to the finite-length cladding tube;

an information calculation module, configured to calculate stiffness information and load information according to model parameters of the finite element mesh model and the structural parameters; and

a deformation calculation module, configured to calculate a creep deformation result of the finite-length cladding tube according to the stiffness information, the load information, a preset additional load vector, and a preset creep deformation calculation relationship.

9. The apparatus according to claim 8, wherein the information calculation module is configured to: acquire a preset matrix; calculate a global stiffness matrix according to the model parameters of the finite element mesh model and the preset matrix, and obtain stiffness information; acquire a first preset function and a second preset function; calculate the load information according to the model parameters of the finite element mesh model, the first preset function, the structural parameters, the preset matrix, and the second preset function.

10. The apparatus according to claim 9, wherein the information calculation module is configured to calculate an element stiffness matrix of each element in the finite element mesh model according to the model parameters of the finite element mesh model and the preset matrix, and assemble element stiffness matrices of elements to obtain the global stiffness matrix.

11. The apparatus according to claim 9, wherein the information calculation module is configured to: calculate the load vector according to the model parameters of the finite element mesh model, the first preset function, and a pressure difference between internal and external pressures in the structural parameters; calculate an additional load vector increment caused by a creep according to the model parameters, the preset matrix, the structural parameters, and the second preset function; and obtain the load information according to the load vector and the additional load vector increment caused by the creep.

12. The apparatus according to claim 11, wherein the information calculation module is configured to determine the load vector and the additional load vector increment caused by the creep as the load information.

13. The apparatus according to any one of claims 8 to 11, wherein the deformation calculation module is configured to: calculate a node displacement of a major axis and a node displacement of a minor axis of a cross section in the middle of the finite-length cladding tube according to the stiffness information, the load information, the preset additional load vector, and the preset creep deformation relationship; calculate a variation result of an ellipticity of the finite-length cladding tube according to the node displacement of the major axis and the node displacement of the minor axis of the cross section in the middle of the finite-length cladding tube; and obtain the creep deformation result according to the node displacement of the major axis and the node displacement of the minor axis of the cross section in the middle of the finite-length cladding tube, and the variation result of the ellipticity.

14. The apparatus according to any one of claims 8 to 11, wherein the creep deformation result comprises a creep displacement curve and an ellipticity variation curve,

the parameter acquisition module is further configured to acquire the structural parameters of the finite-length cladding tube at a current moment;

the discretization processing module is further configured to discretize the structural parameters at the current moment to obtain the finite element mesh model corresponding to the finite-length cladding tube at the current moment;

the information calculation module is further configured to calculate current stiffness information and current load information according to the model parameters of the finite element mesh model corresponding to the current moment and the structural parameters at the current moment;

the deformation calculation module is further configured to calculate the creep deformation result of the finite-length cladding tube at the current moment according to the current stiffness information, the current load information, the preset additional load vector, and the preset creep deformation calculation relationship; and

a curve output module is configured to return to the step of acquiring the structural parameters of the finite-length cladding tube at the current moment, update the current moment to a next moment, calculate the creep deformation result of the finite-length cladding tube at the next moment, continue the calculation until the creep deformation result of the finite-length cladding tube at the end of a service life is calculated, and obtain the creep displacement curve and the ellipticity variation curve of the finite-length cladding tube.

15. A computer device, comprising one or more processors and a memory storing computer-readable instructions, wherein the computer-readable instructions, when executed by the one or more processors, cause the one or more processors to implement the steps of:

acquiring structural parameters of the finite-length cladding tube;
discretizing the structural parameters, and obtaining a finite element mesh model corresponding to the finite-length cladding tube;
calculating stiffness information and load information according to model parameters of the finite element mesh model and the structural parameters; and
calculating a creep deformation result of the finite-length cladding tube according to the stiffness information, the load information, a preset additional load vector, and a preset creep deformation calculation relationship.

16. The computer device according to claim 15, wherein the one or more processors are further configured to be capable of executing the stored computer-readable instructions to: acquire a preset matrix; calculate a global stiffness matrix according to the model parameters of the finite element mesh model and the preset matrix, and obtain the stiffness information; acquire a first preset function and a second preset function; and calculate the load information according to the model parameters of the finite element mesh model, the first preset function, the structural parameters, the preset matrix, and the second preset function.

17. The computer device according to claim 16, wherein the one or more processors are further configured to be capable of executing the stored computer-readable instructions to: calculate an element stiffness matrix of each element in the finite element mesh model according to the model parameters of the finite element mesh model and the preset matrix; and assemble element stiffness matrices of elements to obtain the global stiffness matrix.

18. The computer device according to claim 16, wherein the one or more processors are further configured to be capable of executing the stored computer-readable instructions to: calculate the load vector according to the model parameters of the finite element mesh model, the first preset function, and a pressure difference between internal and external pressures in the structural parameters; calculate an additional load vector increment caused by a creep according to the model parameters, the preset matrix, the structural parameters, and the second preset function; and obtain the load information according to the load vector and the additional load vector increment caused by the creep.

19. One or more computer storage media, on which computer-readable instructions are stored, wherein the one or more computer storage media, when executed by one or more processors, cause the one or more processors to implement the method of any one of claims 1 to 7.

20. A computer program product, comprising a computer program, wherein the computer program, when executed by a processor, causes the processor to implement the method of any one of claims 1 to 7.

| structural parameters of the finite-length cladding tube are acquired | 102 |

↓

| the structural parameters are discretized, and a finite element mesh model corresponding to the finite-length cladding tube is obtained | 104 |

↓

| stiffness information and load information are calculated according to model parameters of the finite element mesh model and the structural parameters | 106 |

↓

| a creep deformation result of the finite-length cladding tube is calculated according to the stiffness information, the load information, a preset additional load vector, and a preset creep deformation calculation relationship | 108 |

FIG. 1

| a preset matrix is acquired | 202 |

↓

| an global stiffness matrix is calculated according to the model parameters of the finite element mesh model and the preset matrix, and stiffness information is obtained | 204 |

↓

| a first preset function and a second preset function are acquired | 206 |

↓

| load information is calculated according to the model parameters of the finite element mesh model, the first preset function, the structural parameters, the preset matrix, and the second preset function | 208 |

FIG. 2

structural parameters of the finite-length cladding tube at a current moment are acquired — 302

discretization processing is performed — 304

an element stiffness matrix is calculated — 306

a global stiffness matrix is calculated, and current stiffness information is obtained — 308

a current load vector is calculated — 310

a current additional load vector increment caused by a creep is calculated — 312

current load information is calculated — 314

the node displacement of the major axis and the node displacement of the minor axis of the cross section in the middle of the finite-length cladding tube at the current moment are calculated — 316

a variation result of the ellipticity at the current moment is calculated — 318

a creep deformation result at the current moment is calculated — 320

the step of calculating the creep deformation result is repeated until the calculation is completed — 322

FIG. 3

FIG. 4

FIG. 5

FIG. 6

FIG. 7

FIG. 8 (a)

FIG. 8 (b)

FIG. 9

FIG. 10

parameter acquisition module ———1102

discretization processing module ———1104

information calculation module ———1106

deformation calculation module ———1108

FIG. 11

memory

processor

internal memory

operating system

computer program

non-transitory storage medium

system bus

input/output interface

input device

communication interface

display unit

computer device

FIG. 12

## INTERNATIONAL SEARCH REPORT

| International application No. |
|---|
| **PCT/CN2022/119009** |

**A. CLASSIFICATION OF SUBJECT MATTER**

G06F 30/17(2020.01)i; G06F 30/23(2020.01)n; G06F 111/10(2020.01)n; G06F 119/02(2020.01)n; G06F 119/14(2020.01)n

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; Elservier; IEEE: 张明, 厉井钢, 包壳, 变形, 蠕变, 离散, 网格, 刚度, 载荷, cladding, deform, creep, discrete, grid, stiffness, load

**C. DOCUMENTS CONSIDERED TO BE RELEVANT**

| Category* | Citation of document, with indication, where appropriate, of the relevant passages | Relevant to claim No. |
|---|---|---|
| PX | CN 114676523 A (CHINA GENERAL NUCLEAR POWER CO., LTD. et al.) 28 June 2022 (2022-06-28)<br>description, paragraphs [0004]-[0227] | 1-20 |
| Y | CN 109583022 A (CHINA GENERAL NUCLEAR POWER CO., LTD. et al.) 05 April 2019 (2019-04-05)<br>description, paragraphs [0006]-[0077] | 1-20 |
| Y | CN 105934797 A (TERRAPOWER LLC) 07 September 2016 (2016-09-07)<br>description, paragraphs [0029]-[0143] | 1-20 |
| A | CN 109000577 A (XI'AN JIAOTONG UNIVERSITY) 14 December 2018 (2018-12-14)<br>entire document | 1-20 |
| A | US 4021300 A (US ENERGY) 03 May 1977 (1977-05-03)<br>entire document | 1-20 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 November 2022** | **09 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| INTERNATIONAL SEARCH REPORT | | | | | | | International application No. |
|---|---|---|---|---|---|---|---|
| Information on patent family members | | | | | | | **PCT/CN2022/119009** |

| Patent document cited in search report | | | Publication date (day/month/year) | Patent family member(s) | | | Publication date (day/month/year) |
|---|---|---|---|---|---|---|---|
| CN | 114676523 | A | 28 June 2022 | None | | | |
| CN | 109583022 | A | 05 April 2019 | WO | 2020088375 | A1 | 07 May 2020 |
| | | | | CN | 109583022 | B | 23 June 2020 |
| CN | 105934797 | A | 07 September 2016 | WO | 2015112984 | A1 | 30 July 2015 |
| | | | | EP | 3100274 | A1 | 07 December 2016 |
| | | | | US | 2016379726 | A1 | 29 December 2016 |
| | | | | JP | 2017505501 | A | 16 February 2017 |
| | | | | RU | 2016132376 | A | 02 March 2018 |
| | | | | KR | 20160114089 | A | 04 October 2016 |
| | | | | EP | 3100274 | A4 | 30 August 2017 |
| | | | | US | 10163534 | B2 | 25 December 2018 |
| CN | 109000577 | A | 14 December 2018 | CN | 109000577 | B | 10 May 2019 |
| US | 4021300 | A | 03 May 1977 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210329562